# EUROPÄISCHE PATENTSCHRIFT

(11) **EP 2 487 007 B1**
(45) Veröffentlichungstag und Bekanntmachung des Hinweises auf die Patenterteilung: **18.09.2013**
(21) Anmeldenummer: 12154763.2
(22) Anmeldetag: 09.02.2012
(51) Int. Cl.: B23P 15/00, B29C 45/40

(54) **Verfahren zur Herstellung einer Auswerferhülse für eine Werkzeugform**
Method of creating an ejector sleeve for a tool mould
Procédé de fabrication d'une broche d'éjection pour un moule à outils

(30) Priorität: 11.02.2011 DE 202011002665 U; 28.04.2011 DE 102011017730
(43) Veröffentlichungstag der Anmeldung: 15.08.2012
(73) Patentinhaber: NTEC Normalien GmbH, 58553 Halver (DE)
(72) Erfinder: Wied, Wolfgang, 58553 Halver (DE)
(74) Vertreter: Gassner, Wolfgang

(56) Entgegenhaltungen:
- EP-A1- 0 645 212
- EP-A1- 1 619 412
- WO-A2-2008/014910
- DE-U1- 29 903 233
- JP-A- 4 235 203
- JP-A- 61 104 808
- JP-U- 61 000 912
- JP-U- 61 109 706
- US-A- 5 730 812

## Beschreibung

Die Erfindung betrifft ein Verfahren zur Herstellung einer Auswerferhülse für eine Werkzeugform.

Bei einer Auswerferhülse handelt es sich um ein Teil, welches in Druckguss- oder Spritzgusswerkzeuge eingesetzt wird und dort der Führung eines Werkzeugstifts dient. Der Werkzeugstift kann die Funktion eines Auswerferstifts erfüllen, mit dem ein gegossenes Bauteil aus dem Werkzeug ausgeworfen wird.

Die WO 2008/014910 A2 offenbart ein Verfahren zum Herstellen eines Werkzeugstifts. Bei dem bekannten Verfahren wird an einem Stiftende ein Schaft angefügt. Am Schaft wird des Weiteren ein Kopf angefügt. Das Fügen erfolgt dabei mittels Schweißen, insbesondere Reibschweißen. - Obgleich das bekannte Verfahren eine vereinfachte Herstellung unterschiedlich ausgestalteter Werkzeugstifte ermöglicht, hat es dennoch mehrere Nachteile. Beim Fügen mittels Schweißen oder Reibschweißen entstehen Nähte, welche eine nachfolgende spanabhebende Nachbearbeitung erforderlich machen. Durch den beim Schweißen erfolgten Wärmeeintrag wird eine Härtung des Stiftendes beeinträchtigt oder zerstört. Infolgedessen sind weitere Fertigungsschritte erforderlich.

Nach dem nächstliegenden Stand der Technik EP 0 645 212 A1 (DE 694 03 297 T2) ist bekannt, Auswerferhülsen durch Warmumformung aus einem Stück herzustellen. Daneben ist es nach dem Stand der Technik auch allgemein bekannt, Auswerferhülsen mittels spanabhebender Verfahren herzustellen. Die bekannten Verfahren erfordern einen relativ hohen fertigungstechnischen Aufwand. Bei einer Herstellung mittels Warmumformen kann es bei einem nachfolgenden Härten dazu kommen, dass sich die Auswerferhülse unerwünschterweise verzieht.

Aufgabe der Erfindung ist es, die Nachteile nach dem Stand der Technik zu beseitigen. Es soll insbesondere ein universelles Verfahren angegeben werden, welches eine vereinfachte Herstellung einer Auswerferhülse ermöglicht.

Die Aufgabe wird durch die Merkmale des Anspruchs 1 gelöst. Zweckmäßige Ausgestaltungen der Erfindung ergeben sich aus den Merkmalen der Ansprüche 2 bis 8.

Nach Maßgabe der Erfindung wird ein Verfahren zur Herstellung einer Auswerferhülse für eine Werkzeugform mit folgenden Schritten vorgeschlagen:
Bereitstellen einer einstückig ausgebildeten Hülse mit einem eine erste Innenquerschnittsgeometrie aufweisenden Führungsabschnitt zum Führen eines Auswerferstifts und einem sich vom Führungsabschnitt erstreckenden Distanzabschnitt mit einer von der ersten Innenquerschnittsgeometrie verschiedenen zweiten Innenquerschnittsgeometrie,
Bereitstellen eines Kopfs mit einem Durchbruch zum Durchführen eines Auswerferstifts,
Kürzen der Hülse auf eine vorgegebene Länge durch Herstellen eines Schnitts im Distanzabschnitt und
Befestigen des Kopfs am schnittseitigen Ende des Distanzabschnitts.

Nach dem erfindungsgemäßen Verfahren wird von einer einstückig ausgebildeten Hülse ausgegangen, die einen Führungsabschnitt mit einer ersten Innenquerschnittsgeometrie und einen davon sich erstreckenden Distanzabschnitt mit einer von der ersten Innenquerschnittsgeometrie verschiedenen zweiten Innenquerschnittsgeometrie aufweist. Unter dem Begriff "Innenquerschnittsgeometrie" wird allgemein die Form und/oder die Größe eines Umrisses der jeweiligen Innenquerschnittsfläche verstanden. Eine durch die "erste Innenquerschnittsgeometrie" gegebene erste Innenquerschnittsfläche ist dabei vorzugsweise kleiner als eine durch die "zweite Innenquerschnittsgeometrie" gegebene zweite Innenquerschnittsfläche. Zwischen dem Distanzabschnitt und dem Führungsabschnitt kann ein Übergangsabschnitt vorgesehen sein, in dem die zweite Innenquerschnittsgeometrie kontinuierlich in die erste Innenquerschnittsgeometrie übergeht.

Nach einem weiteren Merkmal des erfindungsgemäßen Verfahrens wird zunächst als separates Teil ein Kopf mit einem Durchbruch zum Durchführen des Auswerferstifts bereitgestellt. Der Kopf kann in unterschiedlichen Geometrien vorgehalten werden.

Nach einem weiteren Merkmal des erfindungsgemäßen Verfahrens wird die Hülse, welche ebenfalls in unterschiedlichen Längen vorgehalten werden kann, auf eine vorgegebene Länge gekürzt. Dabei wird die Hülse im Distanzabschnitt, nicht jedoch im Führungsabschnitt, geschnitten. Infolgedessen werden weder die Eigenschaften noch die Geometrie des Führungsabschnitts durch das Kürzen der Hülse beeinträchtigt. - Schließlich ist vorgesehen, den Kopf am schnittseitigen Ende des Distanzabschnitts zu befestigen. Ein dabei eventuell auftretender Wärmeeintrag kann lokal begrenzt gehalten werden. Es kann damit ebenfalls eine Beeinträchtigung der Eigenschaften des Führungsabschnitts vermieden werden.

Das erfindungsgemäße Verfahren ist universell. Es ermöglicht auf einfache Weise die Herstellung einer großen Anzahl unterschiedlich ausgestalteter Auswerferhülsen. Indem eine Verbindung lediglich zwischen dem Kopf und dem schnittseitigen Ende des Distanzabschnitts der Hülse hergestellt wird, werden weder eine Geometrie noch die Eigenschaften, insbesondere eine Oberflächenhärtung, des Führungsabschnitts beeinträchtigt. Bei einer geeigneten Befestigung des Kopfs am schnittseitigen Ende des Distanzabschnitts entfällt zudem eine Nachbearbeitung.

Nach einer vorteilhaften Ausgestaltung der Erfindung wird der Führungsabschnitt der Hülse vor dem Anbringen des Kopfs gehärtet. Damit kann eine Wärmebehandlung der Auswerferhülse nach der Befestigung des Kopfs vermieden werden. Zur Befestigung des Kopfs werden zweckmäßigerweise Fügeverfahren verwendet, bei denen zumindest in den Führungsabschnitt keine nennenswerte Wärme eingetragen wird.

Nach einer weiteren vorteilhaften Ausgestaltung ist die erste Innenquerschnittsgeometrie als vorgegebene Passung zum gleitenden Führen des Auswerferstifts hergestellt. Das vereinfacht insgesamt das erfindungsgemäße Verfahren.

Nach einer weiteren Ausgestaltung wird vorgeschlagen, dass der Kopf mittels einer korrespondierend zur Außenquerschnittsgeometrie des Distanzabschnitts ausgestalteten Ausnehmung auf das schnittseitige Ende aufgesteckt oder aufgeschrumpft wird. Alternativ dazu kann auch der Durchbruch korrespondierend zur Außenquerschnittsgeometrie des Distanzabschnitts ausgestaltet sein. In diesem Fall kann der Kopf ebenfalls auf das schnittseitige Ende aufgesteckt oder aufgeschrumpft werden.

Nach einer besonders vorteilhaften Ausgestaltung der Erfindung wird der Kopf mittels eines Klebstoffs am Distanzabschnitt befestigt. Zu diesem Zweck kann der Klebstoff in eine Fläche zwischen der Ausnehmung oder dem Durchbruch eingebracht werden. Es hat sich in der Praxis überraschenderweise gezeigt, dass bereits eine Klebeverbindung zur Befestigung des Kopfs zur Aufnahme der in der Praxis auftretenden Kräfte ausreichend ist. Die vorgeschlagene Klebeverbindung hat weiterhin den Vorteil, dass damit eine "Sollbruchstelle" zwischen der Hülse und dem Kopf geschaffen wird. Damit kommt es im Falle einer unerwünschten Schwergängigkeit eines Auswerferstifts in der Hülse zum Bruch zwischen Kopf und Hülse. Es kann damit sofort die Funktionsuntüchtigkeit des Auswerfers erkannt und behoben werden.

Nach einer weiteren Ausgestaltung ist es auch möglich, den Kopf mittels Reibschweißen, vorzugsweise Ultraschallschweißen, am Distanzabschnitt anzubringen. Insbesondere im Falle des Ultraschallschweißens wird lediglich lokal Wärme in den Bereich des Distanzabschnitts eingetragen. In den Führungsabschnitt wird kaum Wärme eingetragen. Bei der Verwendung eines herkömmlichen Reibschweißverfahrens kann der Führungsabschnitt auch gekühlt werden.

Nachfolgend werden Ausführungsbeispiele der Erfindung anhand der Zeichnungen näher erläutert. Es zeigen:
- Fig. 1: eine Querschnittsansicht einer ersten Auswerferhülse,
- Fig. 2: eine Draufsicht auf den ersten Kopf gemäß Fig. 1,
- Fig. 3: eine Schnittansicht durch einen zweiten Kopf,
- Fig. 4: eine Draufsicht auf den zweiten Kopf gemäß Fig. 3 und
- Fig. 5: eine Schnittansicht durch eine zweite Auswerferhülse.

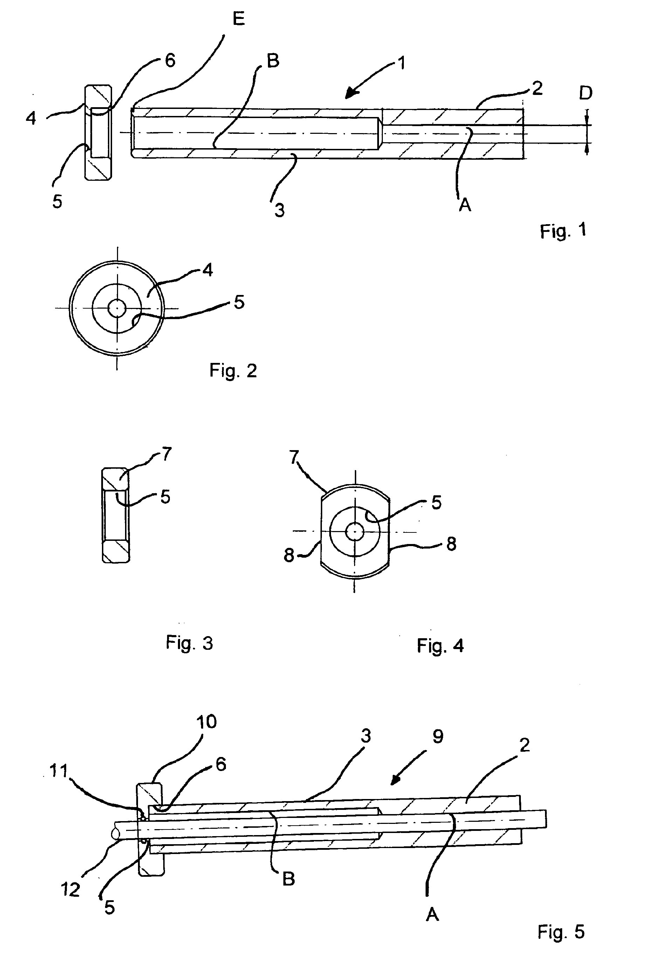

Bei der in Fig. 1 gezeigten ersten Auswerferhülse weist eine aus Metall, vorzugsweise aus einem hochlegierten Stahl, insbesondere einem Warm- oder Kaltarbeitsstahl, hergestellte Hülse 1 einen Führungsabschnitt 2 und einen davon sich erstreckenden Distanzabschnitt 3 auf. Der Führungsabschnitt 2 weist eine erste Innenquerschnittsgeometrie A auf, welche hier einer kreisförmigen Fläche mit dem Durchmesser D entspricht. Der Distanzabschnitt 3 weist eine zweite Innenquerschnittsgeometrie B auf, welche einer weiteren kreisförmigen Fläche entspricht. Eine zur ersten Innenquerschnittsgeometrie A korrespondierende erste Innenquerschnittsfläche ist hier kleiner als eine zur zweiten Innenquerschnittsgeometrie B korrespondierende zweite Innenquerschnittsfläche.

Mit dem Bezugszeichen 4 ist ein erster Kopf bezeichnet, welcher mit einem ersten Durchbruch 5 und eine einseitig bis nahe zum Durchbruch 5 reichende Ausnehmung 6 versehen ist. Ein Innendurchmesser der Ausnehmung 6 ist so ausgestaltet, dass der erste Kopf 4 auf ein mit dem Bezugszeichen E bezeichnetes Ende des Distanzabschnitts 3 aufsteck- oder aufschrumpfbar ist.

Fig. 2 zeigt eine Draufsicht auf den ersten Kopf gemäß Fig. 1. Wie aus Fig. 2 ersichtlich ist, ist der erste Kopf 4 rotationssymmetrisch ausgebildet. Der erste Kopf 4 ist zweckmäßigerweise aus demselben Material hergestellt wie die Hülse 1.

Die Fig. 3 und 4 zeigen einen zweiten Kopf 7. Beim zweiten Kopf 7 ist der Durchbruch 5 wiederum rotationssymmetrisch ausgestaltet. Ein Innendurchmesser des Durchbruchs 5 ist hier so gewählt, dass er zum Außendurchmesser des Distanzabschnitts korrespondiert, d. h. auf diesen aufsteck- oder aufschrumpfbar ist. Wie insbesondere aus Fig. 4 ersichtlich ist, ist der zweite Kopf 7 nicht rotationssymmetrisch ausgebildet, sondern weist zwei einander gegenüberliegende gerade Abschnitte 8 auf. Der Kopf kann auch andere nicht rotationssymmetrische Formen aufweisen. - Die nicht rotationssymmetrische Ausgestaltung des Kopfes hat in der Praxis den Vorteil, dass die Auswerferhülse verdrehsicher in einer zur Geometrie des Kopfes korrespondierenden Werkzeug-Aufnehmung aufgenommen werden kann. Die Geometrie des Kopfes kann dabei beliebige nicht rotationssymmetrische Formen aufweisen.

Bei der in Fig. 5 gezeigten zweiten Auswerferhülse 9 weist ein dritter Kopf 10 wiederum eine Ausnehmung 6 auf. Innerhalb der Ausnehmung 6 befindet sich - ähnlich wie beim ersten Kopf 4 - der Durchbruch 5. Am Innenumfang des Durchbruchs 5 ist eine Ringnut mit einem darin aufgenommenen O-Ring 11 vorgesehen. Mit dem Bezugszeichen 12 ist ein Auswerferstift bezeichnet, welcher im Führungsabschnitt 2 sowie im O-Ring 11 geführt ist.

Die Herstellung der erfindungsgemäßen Auswerferhülsen erfolgt folgendermaßen:
Zur Bereitstellung einer großen Vielfalt von Auswerferhülsen hält ein Hersteller einen Vorrat an Hülsen 1, 9 vor, bei denen der Führungsabschnitt 2 unterschiedlich ausgestaltet ist. Eine Länge des Distanzabschnitts 3 der Hülsen 1, 9 ist so gewählt, dass die Gesamtlänge der Hülse 1, 9 größer oder gleich einer kommerziell maximal nachgefragten Gesamtlänge der Hülse 1, 9 ist.

In einem nächsten Schritt wird die Hülse 1, 9 auf eine gewünschte Gesamtlänge gekürzt, indem ein Schnitt im Bereich des Distanzabschnitts 3 hergestellt wird. Am dabei gebildeten schnittseitigen Ende E des Distanzabschnitts 3 wird dann der Kopf 4, 7, 10 befestigt. Die Befestigung des Kopfs 4, 7, 10 kann mittels eines Klebstoffs, insbesondere eines geeigneten Epoxidharzes oder dgl., erfolgen. Zu diesem Zweck ist es vorteilhaft, die Ausnehmung 6 vorzusehen und den Klebstoff in einen zwischen die Ausnehmung 6 und der Außenseite der Hülse 1 gebildeten Zwischenraum einzubringen. Eine besonders feste Verklebung kann erreicht werden, wenn der Durchbruch 5 so ausgeführt ist, dass der zweite Kopf 7 auf den Distanzabschnitt 3 der Hülse 1 aufsteckbar ist. In diesem Fall kann im sich ausbildenden Ringzwischenraum zwischen dem zweiten Kopf 7 und dem Distanzabschnitt 3 eine besonders große Kontaktfläche mit einen darin eingebrachten Klebstoff erreicht werden. - Die Verbindung des Kopfs 4, 7, 10 mit dem schnittseitigen Ende E des Distanzabschnitts 3 hat den Vorteil, dass eine dadurch bewirkte Verbindung bei Aufbringen einer bestimmten Grenzlast bricht. Die Verbindung des Kopfs 4, 7, 10 mittels Klebstoff führt also zur Ausbildung einer Sollbruchstelle zwischen dem Kopf 4, 7, 10 und der Hülse 1, 9.

Alternativ kann der Kopf 4, 7, 10 auch mittels eines geeigneten Lots mit der Hülse 1, 9 verbunden werden. Insbesondere bei einem nicht rotationssymmetrisch ausgebildeten Kopf 4, 7, 10 ist es auch möglich, z. B. mittels Torsionsultraschallschweißen eine Verbindung mit der Hülse 1, 9 herzustellen, ohne dass nennenswerte Wärme bis in den Führungsabschnitt 2 eingetragen wird.

Der Führungsabschnitt 2 der Hülse 1, 9 ist zweckmäßigerweise gehärtet.

Insbesondere bei einer Verbindung des Kopfs 4, 7, 10 mittels Kleben oder Torsionsultraschallschweißen wird gewährleistet, dass der Führungsabschnitt 2 sich nicht auf eine Temperatur von mehr als 100°C, vorzugsweise nicht mehr als 80°C, besonders bevorzugt nicht mehr als 50°C, erwärmt. Damit wird sichergestellt, dass die Oberflächeneigenschaften des Führungsabschnitts 2 sich durch das Verbinden des Kopfs 4, 7, 10 mit der Hülse 1, 9 nicht verändern. Auch wird damit ein unerwünschter Verzug der Hülse 1, 9 sicher und zuverlässig vermieden.

Im Falle der Herstellung einer Lötverbindung und/oder einer Ultraschallschweißverbindung kann der Führungsabschnitt 2 gekühlt werden, um ein unerwünschtes Aufheizen desselben auf die vorgenannten Temperaturen sicher und zuverlässig zu vermeiden.

### Bezugszeichenliste

- 1: erste Hülse
- 2: Führungsabschnitt
- 3: Distanzabschnitt
- 4: erster Kopf
- 5: erster Durchbruch
- 6: Ausnehmung
- 7: zweiter Kopf
- 8: gerader Abschnitt
- 9: zweite Hülse
- 10: dritter Kopf
- 11: O-Ring
- 12: Auswerferstift

- A: erste Innenquerschnittsgeometrie
- B: zweite Innenquerschnittsgeometrie
- D: Durchmesser
- E: schnittseitiges Ende

## Patentansprüche

1. Verfahren zur Herstellung einer Auswerferhülse für eine Werkzeugform mit folgenden Schritten:
Bereitstellen einer einstückig ausgebildeten Hülse (1, 9) mit einem eine erste Innenquerschnittsgeometrie (A) aufweisenden Führungsabschnitt (2) zum Führen eines Auswerferstifts (12) und einem sich vom Führungsabschnitt (2) erstreckenden Distanzabschnitt (3) mit einer von der ersten Innenquerschnittsgeometrie (A) verschiedenen zweiten Innenquerschnittsgeometrie (B),
Bereitstellen eines Kopfs (4, 7, 10) mit einem Durchbruch (5) zum Durchführen eines Auswerferstifts (12),
Kürzen der Hülse (1, 9) auf eine vorgegebene Länge durch Herstellen eines Schnitts im Distanzabschnitt (3) und
Befestigen des Kopfs (4, 7, 10) am schnittseitigen Ende (E) des Distanzabschnitts (3).

2. Verfahren nach Anspruch 1, wobei der Führungsabschnitt (2) der Hülse (1, 9) vor dem Anbringen des Kopfs (4, 7, 10) gehärtet wird.

3. Verfahren nach einem der vorhergehenden Ansprüche, wobei die erste Innenquerschnittsgeometrie (A) als vorgegebene Passung zum gleitenden Führen des Auswerferstifts (12) hergestellt ist.

4. Verfahren nach einem der vorhergehenden Ansprüche, wobei der Kopf (4, 7, 10) mittels einer korrespondierend zur Außenquerschnittsgeometrie des Distanzabschnitts (3) ausgestalteten Ausnehmung (6) auf das schnittseitige Ende (E) aufgesteckt oder aufgeschrumpft wird.

5. Verfahren nach einem der vorhergehenden Ansprüche, wobei der Kopf (4, 7, 10) mittels des korrespondierend zur Außenquerschnittsgeometrie des Distanzabschnitts (3) ausgestalteten Durchbruchs (5) auf das schnittseitige Ende (E) aufgesteckt oder aufgeschrumpft wird.

6. Verfahren nach einem der vorhergehenden Ansprüche, wobei der Kopf (4, 7, 10) mittels eines Klebstoffs am Distanzabschnitt (3) befestigt wird.

7. Verfahren nach einem der vorhergehenden Ansprüche, wobei der Kopf (4, 7, 10) mittels Reibschweißen, vorzugsweise Ultraschallschweißen, am Distanzabschnitt (3) angebracht wird.

8. Verfahren nach einem der vorhergehenden Ansprüche, wobei in eine am Innenumfang des Durchbruchs (5) vorgesehene Ringnut ein Dichtring (11) eingesetzt wird.

## Claims

1. A method for producing an ejector sleeve for a tool mould, said method comprising the following steps:
providing a one-piece sleeve (1, 9) with a guide portion (2) having a first inner cross-sectional geometry (A) for guiding an ejector pin (12) and with a spacer portion (3), which extends from the guide portion (2) and has a second inner cross-sectional geometry (B) different from the first cross-sectional geometry (A),
providing a head (4, 7, 10) with an aperture (5) for passing through an ejector pin (12),
shortening the sleeve (1, 9) to a predefined length by producing a cut in the spacer portion (3), and
fastening the head (4, 7, 10) to the cut-side end (E) of the spacer portion (3).

2. The method according to Claim 1, wherein the guide portion (2) of the sleeve (1, 9) is hardened before the head (4, 7, 10) is attached.

3. The method according to one of the preceding claims, wherein the first inner cross-sectional geometry (A) is produced as a predefined fit in order to guide the ejector pin (12) in a sliding manner.

4. The method according to one of the preceding claims, wherein the head (4, 7, 10) is fitted or shrunk onto the cut-side end (E) by means of a recess (6) shaped in a manner corresponding to the outer cross-sectional geometry of the spacer portion (3).

5. The method according to one of the preceding claims, wherein the head (4, 7, 10) is fitted or shrunk onto the cut-side end (E) by means of the aperture (5) shaped in a manner corresponding to the outer cross-sectional geometry of the spacer portion (3).

6. The method according to one of the preceding claims, wherein the head (4, 7, 10) is fastened to the spacer portion (3) by means of an adhesive.

7. The method according to one of the preceding claims, wherein the head (4, 7, 10) is attached to the spacer portion (3) by means of friction welding, preferably ultrasonic welding.

8. The method according to one of the preceding claims, wherein a ring seal (11) is inserted into an annular groove provided at the inner circumference of the aperture (5).

## Revendications

1. Procédé de fabrication d'une broche d'éjection pour un moule à outils selon les opérations suivantes:
préparation d'une broche réalisée en une pièce (1, 9) avec un segment de guidage (2) présentant une première géométrie de section transversale intérieure (A) pour le guidage d'une tige d'éjection (12) et un segment d'écartement (3) s'étendant à partir du segment de guidage (2) avec une seconde géométrie de section transversale intérieure (B) différente de la première géométrie de section transversale intérieure (A),
préparation d'une tête (4, 7, 10) avec un passage (5) pour introduire une tige d'éjection (12),
réduction de la broche (1, 9) à une longueur prédéfinie en réalisant une coupe dans le segment d'écartement (3) et
fixation de la tête (4, 7, 10) à l'extrémité côté coupe (E) du segment d'écartement (3).

2. Procédé selon la revendication 1, où le segment de guidage (2) de la broche (1, 9) est trempé avant la mise en place de la tête (4, 7, 10).

3. Procédé selon l'une des revendications précédentes, où la première géométrie de section transversale intérieure (A) est réalisée comme ajustage prédéfini pour le guidage coulissant de la tige d'éjection (12).

4. Procédé selon l'une des revendications précédentes, où la tête (4, 7, 10) est rapportée ou emmanchée sur l'extrémité côté coupe (E) au moyen d'un évidement (6) réalisé correspondant à la géométrie de section transversale extérieure du segment d'écartement (3).

5. Procédé selon l'une des revendications précédentes, où la tête (4, 7, 10) est rapportée ou emmanchée sur l'extrémité côté coupe (E) au moyen du passage (5) réalisé correspondant à la géométrie de section transversale extérieure du segment d'écartement (3).

6. Procédé selon l'une des revendications précédentes, où la tête (4, 7, 10) est fixée sur le segment d'écartement (3) au moyen d'une colle.

7. Procédé selon l'une des revendications précédentes, où la tête (4, 7, 10) est montée sur le segment d'écartement (3) au moyen de soudage par friction, de préférence de soudage par ultrasons.

8. Procédé selon l'une des revendications précédentes, où un anneau d'étanchéité (11) est inséré dans une rainure annulaire prévue sur le périmètre intérieur du passage (5).
